# EUROPEAN PATENT APPLICATION

(11) **EP 4 674 548 A1**
(43) Date of publication of application: **07.01.2026**
(21) Application number: 25186395.7
(22) Date of filing: 30.06.2025
(51) Int. Cl.: B23B 27/06, B23B 27/14, B23B 27/04

(54) **CUTTING TOOL**

(30) Priority: 01.07.2024 JP 2024106156
(71) Applicant: Tungaloy Corporation, Iwaki-shi, Fukushima 970-1144 (JP)
(72) Inventor: SASAKI, Yasutake, Iwaki-shi, Fukushima, 9701144 (JP)
(74) Representative: Vossius & Partner Patentanwälte Rechtsanwälte mbB

(57) **Abstract**

A cutting tool includes: a cutting edge configured on an intersecting line of a rake surface and a flank; a breaker wall formed inside the cutting edge and protruding above the cutting tool; a boss part including a boss surface formed above the breaker wall; and a plurality of recessed parts formed in the boss part so as to extend toward the cutting edge. The width of the breaker wall in a direction in which the cutting edge extends along an intersecting line (including a virtual intersecting line or a virtual extension of the intersecting line) of the boss surface and the breaker wall, is greater than the width of a groove formed by the recessed part along the same intersecting line.

## Description

### Background

### Field

The present invention relates to a cutting tool.

### Description of Related Art

A cutting insert having a circular-arc-shaped cutting edge made of carbide may be used for cutting tools for use in copy machining and finishing (see, for example, JP5,592,954 B, JP5,262,528 B, and US9,579,727 B). Further, a cutting insert having a cutting edge made of a sintered body containing cBN (cubic boron nitride), which is harder than carbide, may be used for machining materials with a high degree of hardness. When such cutting insert is used in, for example, finishing, the cutting depth is generally set at around 0.2 mm, which is very low compared to values set for carbide inserts.

When conventional cutting inserts as described above are used for finishing and the like, supply of coolant to the cutting edge is not sufficient in some cases.

### Summary

Under the above-described circumstances, the present invention is intended to be applied particularly to cutting inserts for use in copy machining and finishing, and an object thereof is to provide a cutting tool that achieves improved capability of supplying coolant to a cutting edge, as well as providing improved chip control and higher durability.

The present inventors conducted studies from various aspects in order to achieve the above-described object. The above-mentioned type of cutting tool is comprised of a flank, a honed cutting edge (having a circular-arc shape or a chamfered shape), and a rake surface. Such cutting tool is unable to control chips if it does not have a breaker formed therein. In that case, chips may tangle with the workpiece and degrade the quality of the surface to be machined, leading to poor machining, or it may be necessary to stop the machine in order to remove chips trapped in the holder, leading to a deterioration of production efficiency. Examples of measures that can be taken in order to address such problems may include changing the machining conditions and changing the honed shape of the cutting edge; however, these measures may in turn reduce machining efficiency or cause chattering on the machined surface, so that it may not be possible to completely resolve such problems. Meanwhile, when a cutting tool with a breaker is used under machining conditions involving a low cutting depth as mentioned above, the breaker width needs to be narrow in order to restrain chips. In the case where a tool with a circular-arc-shape cutting edge is used for copy machining, the breaker width is desirably uniform with respect to the circular-arc-shaped cutting edge and the cutting edge is desirably uniform. For these reasons, coolant supplied from the outside may spread around when it hits on a boss surface and a sufficient amount of coolant may not be supplied to the cutting edge through the narrow breaker width. Moreover, chips are generated between the boss surface and the cutting edge during the cutting process and such chips may disturb the flow of coolant, which may result in it being difficult to supply coolant to the cutting point, i.e., the point where heat is generated the most due to cutting. The present inventors continued diligent studies while paying attention to these conventional configurations, and finally obtained a finding leading to a solution to these problems.

An aspect of the present invention that has been completed based on such finding is a cutting tool which includes:
a rake surface;
a flank;
a cutting edge configured on an intersecting line of the rake surface and the flank;
a breaker wall formed inside the cutting edge and protruding above the cutting tool;
a boss part including a boss surface formed above the breaker wall; and
a plurality of recessed parts formed in the boss part so as to extend toward the cutting edge,
wherein a width of the breaker wall in a direction in which the cutting edge extends along an intersecting line or virtual intersecting line of the boss surface and the breaker wall is greater than a width of a groove formed by the recessed part along a virtual extension of the intersecting line.

According to the above-described cutting tool, since the recessed parts are formed in the boss surface and extend toward the cutting edge, coolant, which would otherwise be spread and distributed due to the existence of the boss surface, is allowed to flow through the recessed parts and then be delivered toward the cutting edge. Moreover, according to the above-described cutting tool, the region including the breaker wall is configured so as to be dominant with respect to the cutting edge, and as a result, stable chip control can be performed with the effect of the breaker wall, while ensuring supply of coolant through the grooves formed by the recessed parts.

In the above-described cutting tool, the width of the breaker wall may be twice or more of the width of the groove formed by the recessed part.

In the above-described cutting tool, the cutting edge may be formed in a circular-arc shape in a top view seen from a side of the cutting tool in which the rake surface is located.

In the above-described cutting tool, the cutting edge may be in a circular-arc shape having a central angle that is greater than 180 degrees.

In the above-described cutting tool, each of the recessed parts may be formed of a groove that is linear in a top view.

In the above-described cutting tool, each of the recessed parts may be formed of a groove with a constant width.

In the above-described cutting tool, the bottom surface of each of the recessed parts may be at a lower level than the cutting edge in a front view or a side view seen in a direction perpendicular to a top view.

In the above-described cutting tool, the distance between the breaker wall and the cutting edge may be uniform.

In the above-described cutting tool, the distance between the breaker wall and the cutting edge may be non-uniform.

In the above-described cutting tool, an arc-shaped depression that continues to the recessed parts may be formed near the center of the cutting edge that is formed in a circular-arc shape.

In the above-described cutting tool, the cutting edge may be honed so as to have a chamfered shape.

In the above-described cutting tool, each of the recessed parts may be formed in a hole shape.

### Brief Description of Drawings

Fig. 1 is a perspective view showing an example of a cutting tool in an aspect of the present invention.
Fig. 2 is a front view of a cutting tool.
Fig. 3 is a top view of a cutting tool.
Fig. 4 is a right-side view of a cutting tool.
Fig. 5 is a perspective view of a cutting tool showing an enlarged illustration of the cutting edge member of the cutting tool.
Fig. 6 is a top view of a cutting tool showing an enlarged illustration of a portion of the cutting edge member of the cutting tool.
Fig. 7 is a perspective view of a cutting tool showing an enlarged illustration of the cutting edge member of the cutting tool as viewed from a side of the cutting tool.
Fig. 8 is a schematic view illustrating a flow of coolant in a cutting edge member.
Fig. 9 is an illustration showing the cross-sectional shape of a cutting edge member.
Fig. 10 illustrates another form of a cutting tool with an enlarged perspective view of a cutting edge member.
Fig. 11 illustrates yet another form of a cutting tool with an enlarged perspective view of a cutting edge member.
Fig. 12 is a schematic perspective view illustrating, for the sake of reference, a flow of coolant in a cutting edge member in which no recessed part is formed in a boss part.
Fig. 13 is a schematic side view illustrating, for the sake of reference, a flow of coolant in a cutting edge member in which no recessed part is formed in a boss part.
Fig. 14 is a top view of a cutting edge member, showing the central angle α of a cutting edge, back tapering, etc.

### Detailed Description

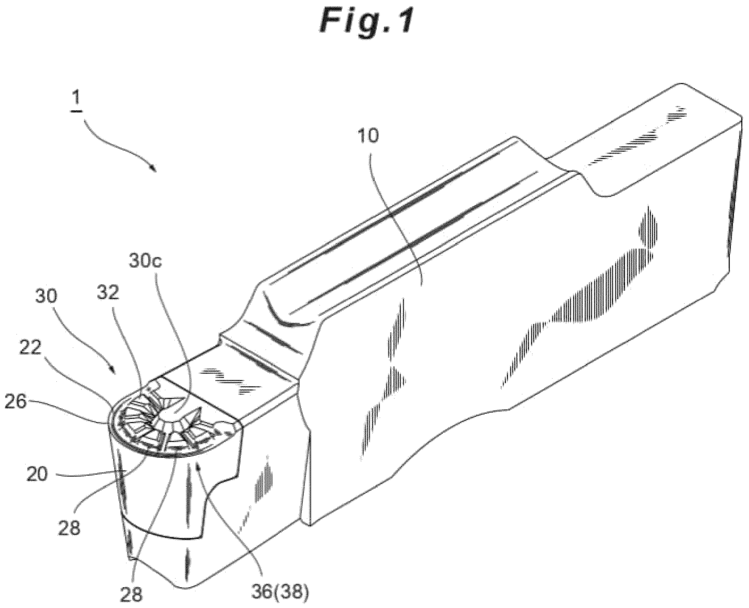

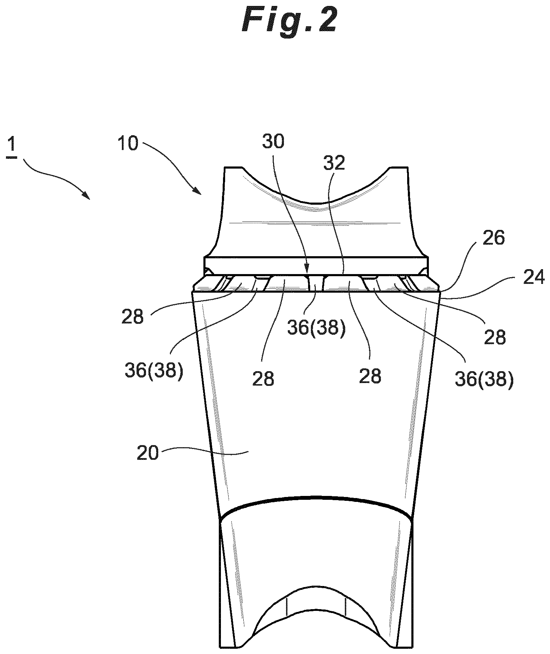

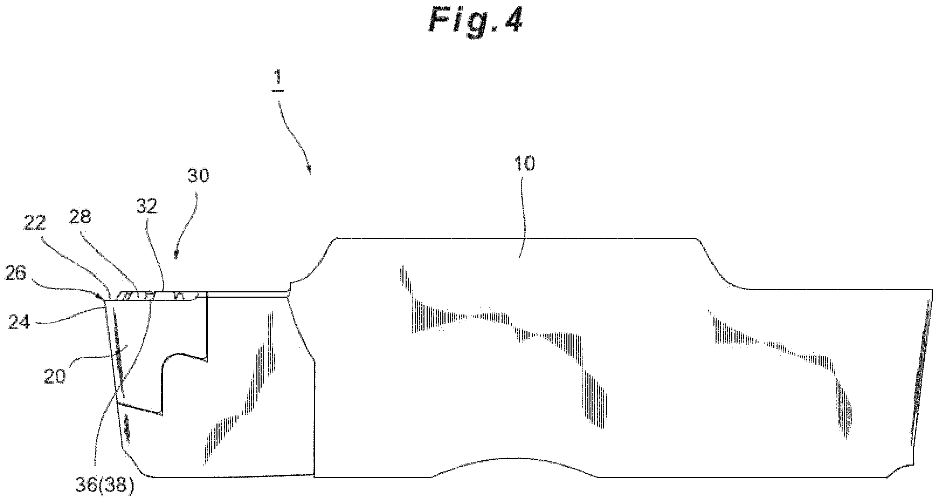

Preferred embodiments of a cutting tool according to the present invention will now be described in detail, with reference to the attached drawings (see Figs. 1-9, etc.). The below description will explain, by way of example, a cutting insert 1 as a preferred embodiment which comprises a base insert member 10 and a cutting edge member 20. The below description will be made by assuming that the "front-back direction" of the cutting insert corresponds to the longitudinal direction of the base insert member 10 (along the central axis 10X), while the "width direction" of the cutting insert corresponds to the lateral direction in Fig. 2, and by assuming that the upper side in Fig. 2 (which is a side in which a boss part 30, described later, is located) corresponds to the "top" side of the cutting insert, while the lower side in Fig. 2 corresponds to the "bottom" side of the cutting insert.

The base insert member 10 is a member that holds the brazed cutting edge member 20 (see Figs. 1-4). The base insert member 10 in this embodiment is made of a carbide material and formed in a shape that extends along the central axis 10X.

The cutting edge member 20 is made of a sintered body containing cBN (cubic boron nitride), which is harder than carbide, and brazed at an end of the base insert member 10, thereby constituting the cutting insert 1. The cutting edge member 20 in this embodiment includes a rake surface 22, a flank 24, a cutting edge 26, a breaker wall 28, a boss part 30, a boss surface 32, a depression 34, recessed parts 36, grooves 38, and so on (see Fig. 1, etc.).

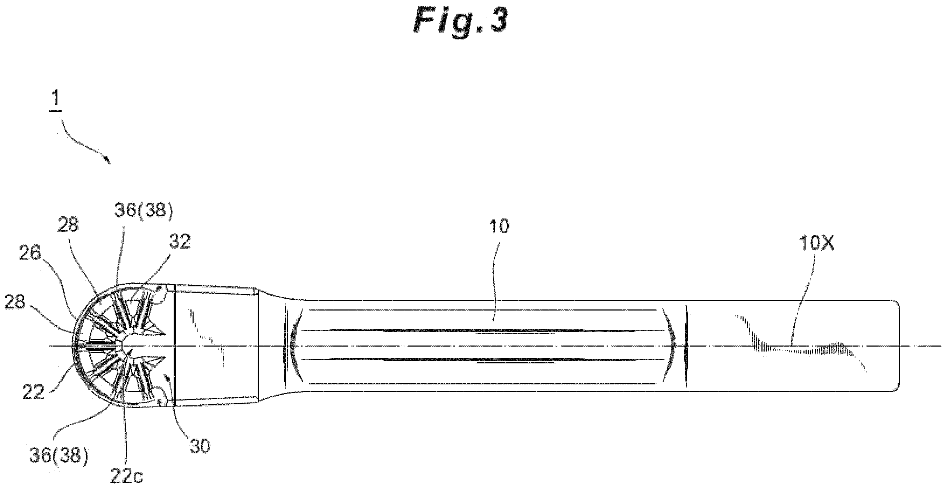

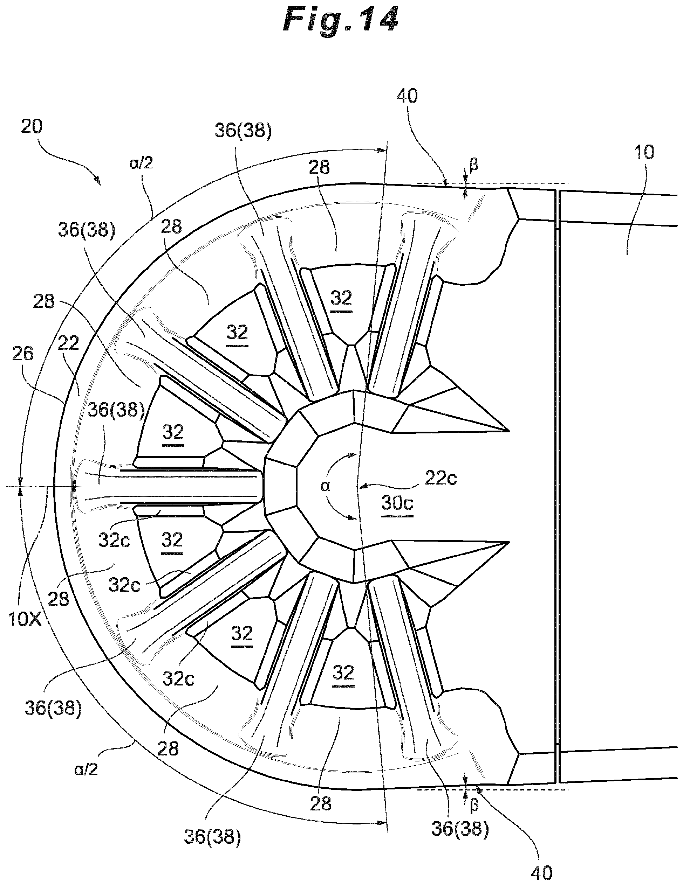

The cutting edge 26 is formed on an intersecting line of the rake surface 22 and the flank 24. In the cutting edge member 20 of this embodiment, the cutting edge 26 is formed in a substantially semi-circular-arc shape in a top view as viewed from a side of the cutting edge member 20 where the rake surface 22 is located (see Fig. 3, etc.). The central angle α of the substantially circular-arc-shaped cutting edge 26 is slightly over 180 degrees (e.g., about 185 degrees). When the central angle α is 185 degrees, the angle formed on each side with respect to the central axis 10X is α/2 (i.e., 92.5 degrees) (see Fig. 14, etc.). The back portion of the cutting edge 26, i.e., the portion that is closer to the base insert member 10 and provides a clearance, is a portion that may also be referred to as "back tapering," in which the width gradually decreases from the maximum width of the cutting edge 26 (such portion is indicated by reference numeral 40 in Fig. 14). The clearance angle β of the back tapering 40 (which is an angle formed between the back tapering 40 and a line parallel to the central axis 10X) may be, for example, 2.5 degrees (see Fig. 14). Such back tapering 40 is hidden and invisible in a front view of the cutting insert 1 when viewed from the leading end side of the base insert member 10 along the central axis 10X (see Figs. 2, 3, etc.). The approximate center of such substantially circular-arc-shaped cutting edge 26 is indicated by reference numeral 22c in Fig. 3, etc. Although a detailed illustration is not given herein, the cutting edge 26 may be chamfered via a honing process.

The rake surface 22 is formed on the upper surface side of the cutting edge member 20 along the substantially circular-arc-shaped cutting edge 26. The flank 24 is formed on the side surface of the cutting edge member 20 along the substantially circular-arc-shaped cutting edge 26, and such flank 24 is formed as a positive-shape surface that is inclined so as to approach the lower surface as it extends away from the cutting edge 26.

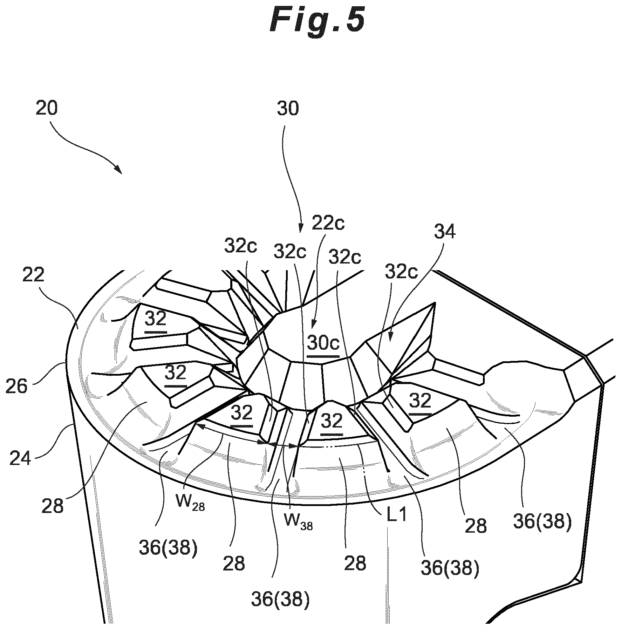

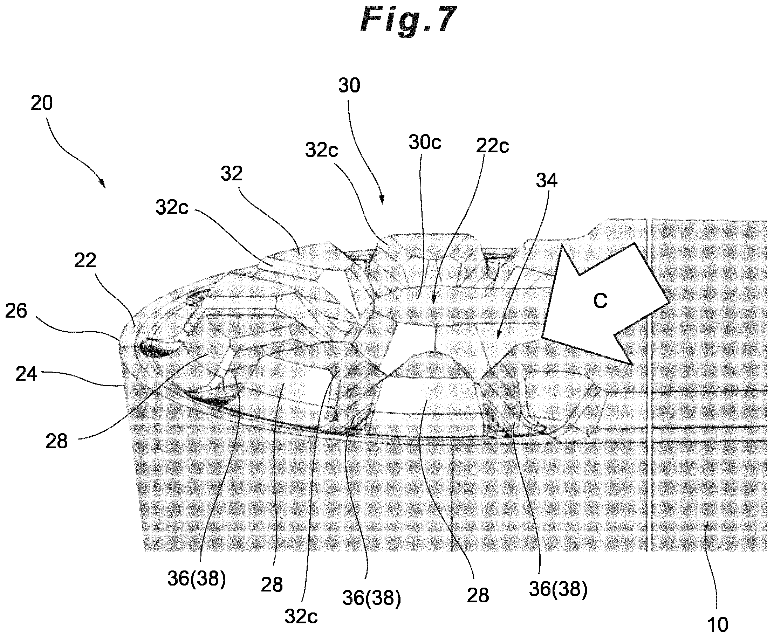

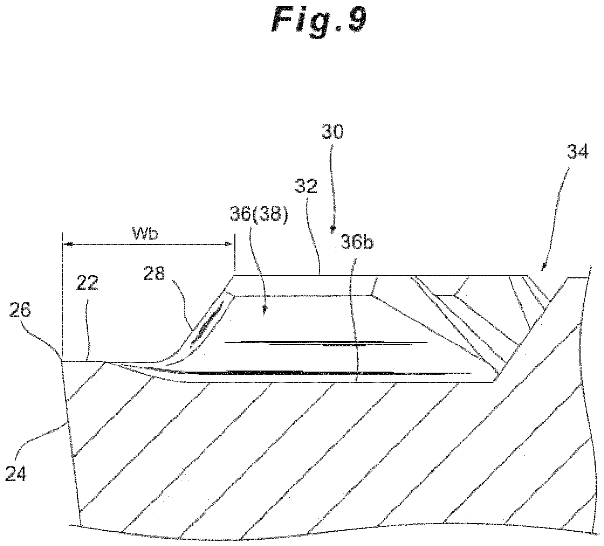

The breaker wall 28 is formed inside the cutting edge 26 so that the wall protrudes upward from the cutting edge member 20. In the cutting edge member 20 of this embodiment, the breaker wall 28 has a substantially circular-arc shape as a whole and is divided into segments by a plurality of recessed parts 36 that are described later (see Figs. 1, 5, etc.). In the cutting edge member 20 of this embodiment, the distance between the breaker wall 28 and the cutting edge 26 (which will be referred to as a breaker width and indicated by "Wb" in Fig. 9) is uniform, and the surface of the breaker wall 28 is shaped like a circumference of a truncated cone (see Fig. 7, etc.).

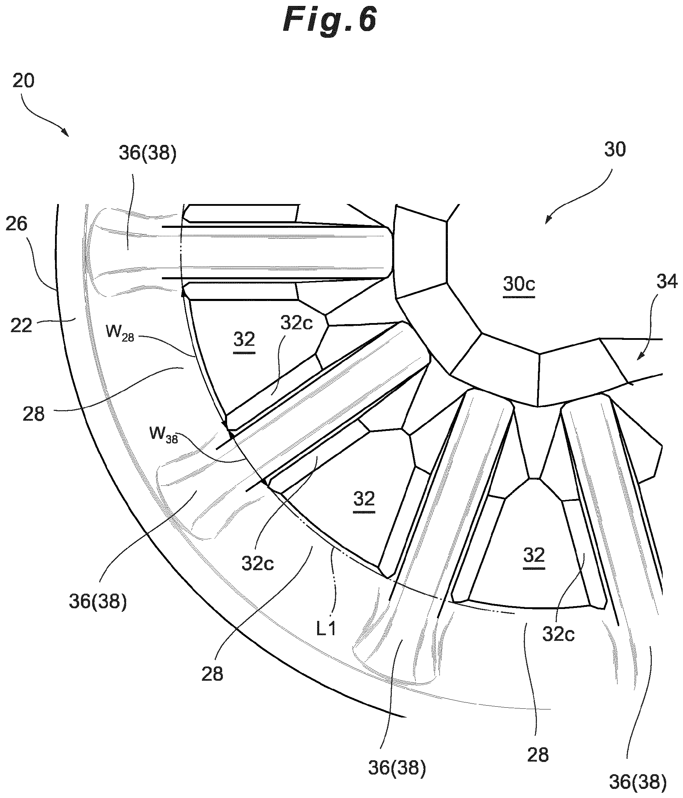

The boss part 30 is configured by a top portion that is formed so as to protrude upward relative to the breaker wall 28. A boss surface 32 is formed on the upper side of the boss part 30 (see Figs. 5, 6, etc.). The boss surface 32 may be chamfered (in Fig. 5, such chamfered part is indicated by reference numeral 32c). In the cutting edge member 20 of this embodiment, the boss part 30 is generally formed like a thin (or short) truncated semi-cone. Further, the boss surface 32, being the upper surface of the boss part 30, is divided by a plurality of recessed parts 36 that are described later (see Figs. 1, 5, etc.). The boss part 30 also includes a central boss part (a portion of the boss part 30 that is near the approximate center 22c) which is located inside the arc-shaped depression 34, which is also described later (see Fig. 5, etc.).

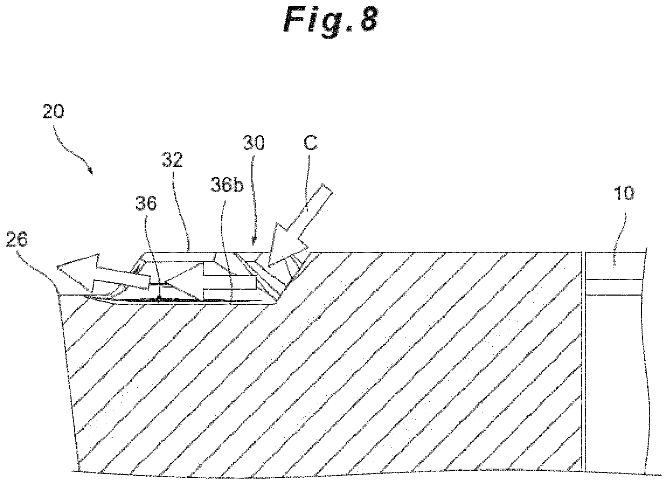

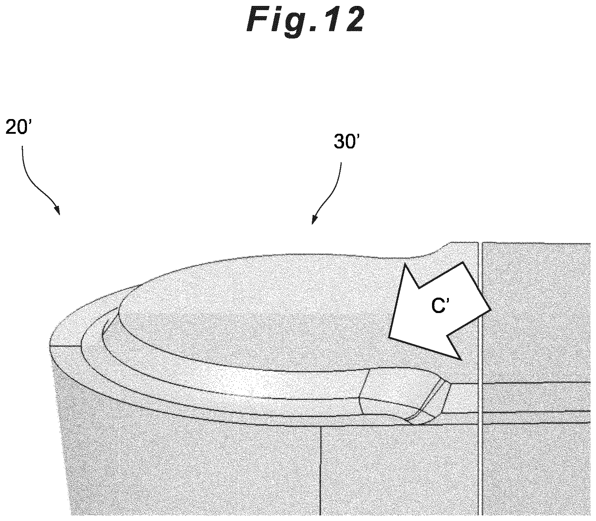

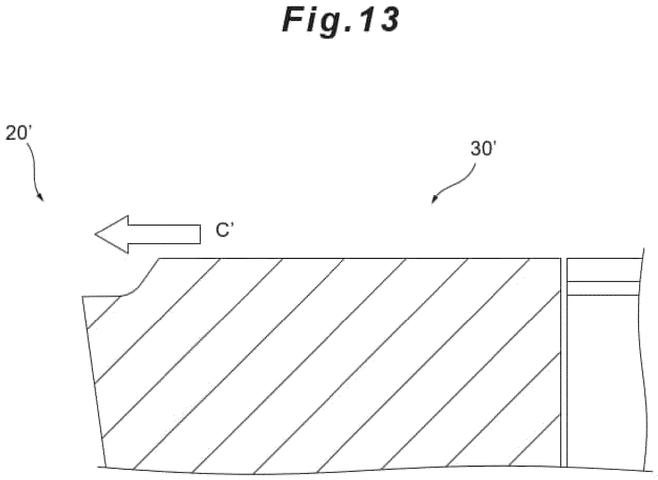

A plurality of recessed parts 36 is formed in the boss part 30, with each recessed part extending toward the cutting edge 26 and enhancing the capability of supplying coolant C to the cutting edge 26 (see Fig. 5, etc.). In comparison to a flow of coolant C' in a cutting edge member 20' with a boss part 30' having no recessed part formed therein (see Figs. 12 and 13), the amount of coolant C supplied to the cutting edge 26 can be increased as a result of the coolant C being allowed to flow through the grooves 38 formed by these recessed parts 36 (see Figs. 7 and 8). It is desirable for such recessed parts 36 to be formed so as to achieve a more efficient supply of coolant C to the cutting edge 26. In the cutting edge member 20 of this embodiment, the recessed parts 36 are formed radially from the central boss part 30c. Each of such recessed parts 36 is formed as a linear groove having a constant width in a top view (see Figs. 3 and 6). Furthermore, in the cutting edge member 20 of this embodiment, the bottom surface 36b of the recessed part 36 is at a lower level than the cutting edge 26 when seen in a front view or a side view (see Figs. 8 and 9). With this configuration, when chips are generated during cutting, coolant will flow into the space between the rake surface 22 and the chips, which facilitates the delivery of coolant to the cutting point.

The cutting edge member 20 of this embodiment is designed such that the width (W₂₈) of the breaker wall 28 is greater than the width (W₃₈) of the groove 38 formed by the recessed part 36 (W₂₈ > W₃₈) (see Fig. 5, etc.). By employing such shape, the region including the breaker wall 28 is more dominant with respect to the cutting edge 26 than the region including the groove 38 is, so that stable chip control can be achieved with the effect of the breaker wall 28, while supply of coolant C through the groove 38 formed by the recessed part 36 is ensured. Here, the "width W₂₈ of the breaker wall 28" and the "width W₃₈ of the groove 38 formed by the recessed part 36" may be defined in various ways and, as an example, the present embodiment defines the widths as follows. First, the boss surface 32 and the breaker wall 28 are assumed to be forming an intersecting line L1 therebetween (such line includes a virtual intersecting line or a virtual extension of the intersecting line; the same will also apply hereinafter). In the present embodiment, the above-mentioned chamfered part 32c is considered to constitute part of the boss surface 32, and a virtual intersecting line L1 is assumed to be an intersecting line between such boss surface 32 (including the chamfered part 32c) and the breaker wall 28 (see Fig. 5). Then, on the defined intersecting line L1, the width of the breaker wall 28 along the intersecting line L1 and the width of the groove 38 formed by the recessed part 36 along the intersecting line L1 are defined as their respective widths, represented by W₂₈ and W₃₈, respectively. The width W₂₈ of the breaker wall 28 and the width W₃₈ of the groove 38 formed by the recessed part 36 as defined above satisfy W₂₈ > W₃₈ as described above, and the width W₂₈ may be twice or more of the width W₃₈ in some cases. The present embodiment is expected to be used for a finishing process involving a small cutting depth and a small feed rate, and if the width W₂₈ of the breaker wall 28 is less than twice the width W₃₈ of the groove 38 formed by the recessed part 36 in such finishing process, appropriate chip control may not be made due to the breaker wall 28 functioning inadequately.

The depression 34 is formed so as to continue to the recessed parts 36. Such depression 34 is formed in a substantially circular-arc shape around the central boss part 30c, being the center part of the cutting edge 26, and allows the coolant C that flows into the depression 34 to further flow to the recessed parts 36, which communicate with the depression 34.

According to the cutting insert 1 of the present embodiment having the cutting edge member 20 in the above-described configuration, since the boss part 30 has the recessed parts 36 that extend toward the cutting edge 26, coolant C, which would otherwise be spread and distributed over the boss part 30 or the boss surface 32, is allowed to flow through the recessed parts 36 (more specifically, the grooves 38 formed by the recessed parts 36) so that a sufficient amount of coolant C can be delivered to the cutting edge 26. Furthermore, the bottom surface 36b of the recessed parts 36 is set at a lower level than the cutting edge 26, and accordingly, even when chips are generated during cutting, coolant C flows into the space between the chips and the rake surface 22, which facilitates the coolant successfully reaching the cutting point (see Fig. 8, etc.). Moreover, the breaker wall 28 and the recessed part 36 through which the coolant C flows are alternately arranged, and this structure can easily respond to a change of the machining direction during copy machining and makes it easy to achieve both good chip control and long life of the tool at the same time.

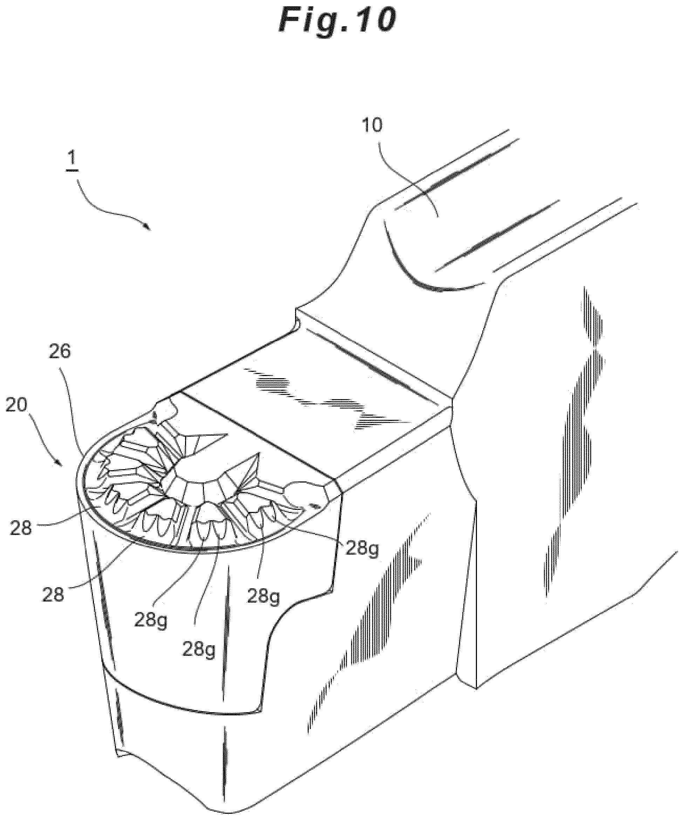

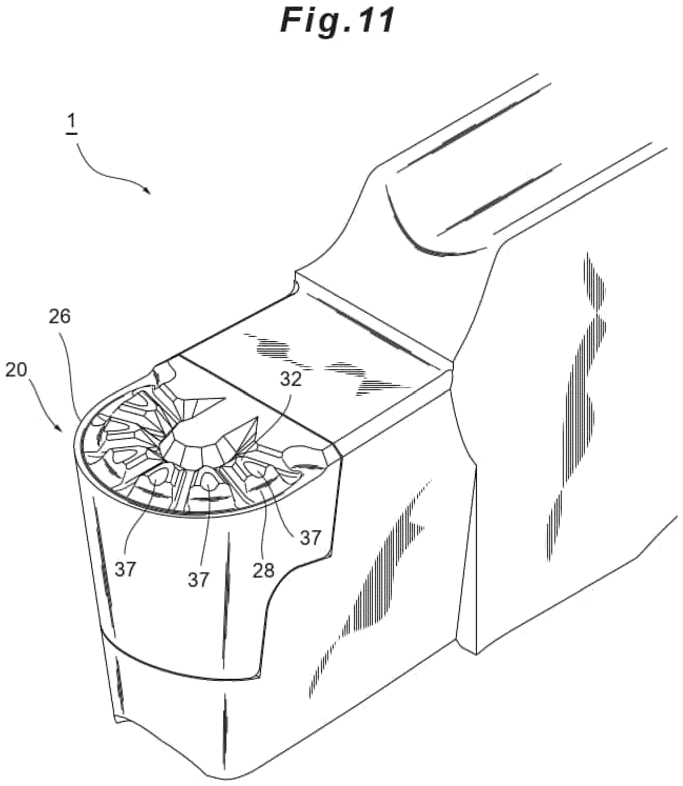

The above-described embodiment is a suitable example of an embodiment of the present invention; however, the present invention is not limited to such example and may be modified in various ways without departing from the spirit thereof. For example, the above embodiment describes the cutting edge member 20 in which the breaker wall 28 and the cutting edge 26 have a uniform distance (breaker width Wb) between them (see Fig. 7, etc.); however, conversely, such distance (breaker width Wb) between the breaker wall 28 and the cutting edge 26 may be non-uniform. Specific examples of the cutting edge member 20 having a non-uniform breaker width Wb may include, for example, a cutting edge member having two projections 28g on the breaker wall 28 (see Fig. 10). Making such projections 28g and establishing a suitable breaker width Wb according to the position of the cutting edge 26 used enables chip control to be performed in a more favorable manner. Alternatively, the boss part 30 may be further provided with small recessed parts 37 different from the recessed parts 36, which may be formed like a notch (see Fig. 11). In such configuration, coolant C is also provided through the small recessed parts 37, so that an increased amount of coolant C can be delivered toward the cutting edge 26.

Further, the specific form of the recessed part 36 formed in the boss part 30 is not limited to the form described above. For example, although not illustrated in the attached drawings, the recessed part 36 may have a hole shape and constitute a tunnel-like part. In such configuration, the recessed part 36 is not open at the top, so that coolant C, once it is introduced into the recessed part 36, can be delivered to the cutting edge 26 without having any leakage to the outside. Alternatively, the recessed part 36 may be shaped as a groove having a branch in the middle, rather than a single groove. In this configuration, coolant C can be supplied in a manner that it is evenly distributed over the entire cutting edge 26. The recessed part 36 may be inclined with respect to the flat boss surface 32. In this configuration, coolant C can easily penetrate between the cutting edge 26 and the chips. Moreover, the recessed part 36 in the above-described embodiment is formed so as to extend perpendicularly to (the tangent line of) the cutting edge 26; however, the recessed part 36 may be formed in a different shape that is not perpendicular to (the tangent line of) the cutting edge 26. In this configuration, when cutting is performed under the condition of using a particular portion of the entire cutting edge 26 in a concentrated manner, it is possible to supply coolant C in a concentrated manner to the particular portion through two or more recessed parts 36.

The above-mentioned embodiment describes an example in which the present invention is applied to a cutting insert 1 having a cutting edge member 20 that is brazed to a base insert member 10; however, this is also merely a favorable example, and it will obviously be understood that the present invention can also be applied to cutting tools other than such cutting insert 1.

The present invention is suited for use in cutting tools, including cutting inserts.

## Claims

1. A cutting tool comprising:
a rake surface;
a flank;
a cutting edge configured on an intersecting line of the rake surface and the flank;
a breaker wall formed inside the cutting edge and protruding above the cutting tool;
a boss part including a boss surface formed above the breaker wall; and
a plurality of recessed parts formed in the boss part so as to extend toward the cutting edge,
wherein a width of the breaker wall in a direction in which the cutting edge extends along an intersecting line or virtual intersecting line of the boss surface and the breaker wall is greater than a width of a groove formed by the recessed part along a virtual extension of the intersecting line.

2. The cutting tool according to claim 1, wherein the width of the breaker wall is twice or more of the width of the groove formed by the recessed part.

3. The cutting tool according to claim 1 or 2, wherein the cutting edge is formed in a circular-arc shape in a top view seen from a side of the cutting tool in which the rake surface is formed.

4. The cutting tool according to claim 3, wherein the cutting edge is in a circular-arc shape with a central angle greater than 180 degrees.

5. The cutting tool according to any one of claims 1 to 4, wherein each of the recessed parts is formed of a groove that is linear in a top view.

6. The cutting tool according to claim 5, wherein each of the recessed parts is formed of a groove having a constant width.

7. The cutting tool according to any one of claims 1 to 6, wherein, in a front view or a side view seen in a direction perpendicular to a top view, a bottom surface of each of the recessed parts is at a lower level than the cutting edge.

8. The cutting tool according to any one of claims 1-7, wherein a distance between the breaker wall and the cutting edge is uniform.

9. The cutting tool according to any one of claims 1-7, wherein a distance between the breaker wall and the cutting edge is non-uniform.

10. The cutting tool according to any one of claims 1-7, wherein an arc-shaped depression that continues to the recessed parts is formed near a center of the cutting edge that is formed in a circular-arc shape.

11. The cutting tool according to any one of claims 1-7, wherein the cutting edge is honed so as to have a chamfered shape.

12. The cutting tool according to any one of claims 1-7, wherein each of the recessed parts is formed in a hole shape.
